# EUROPÄISCHE PATENTSCHRIFT

(11) **EP 4 174 001 B1**
(45) Veröffentlichungstag und Bekanntmachung des Hinweises auf die Patenterteilung: **27.11.2024**
(21) Anmeldenummer: 22000212.5
(22) Anmeldetag: 12.09.2022
(51) Int. Cl.: B65G 57/03, B65G 57/06, B65G 57/10, B65G 47/82, B65G 43/08, B65G 47/88

(54) **MASCHINE ZUM SORTIEREN UND STAPELN VON STEIGEN MIT KLAPPBAREN SEITENWÄNDEN**
MACHINE FOR SORTING AND STACKING CRATES WITH FOLDABLE SIDE WALLS
MACHINE POUR TRIER ET EMPILER DES COLONNES À PAROIS LATÉRALES REPLIABLES

(30) Priorität: 28.10.2021 IT 202100027653
(43) Veröffentlichungstag der Anmeldung: 03.05.2023
(73) Patentinhaber: Tanzer Maschinenbau Srl, 39011 Lana (BZ) (IT)
(72) Erfinder: Tanzer, Peter, I-39011 Lana (BZ) (IT); Trogmann, Albrecht, I-39011 Lana (BZ) (IT); Schnitzer, Josef, I-39019 Dorf Tirol (BZ) (IT)
(74) Vertreter: Oberosler, Ludwig

(56) Entgegenhaltungen:
- EP-A1- 3 865 223
- CN-U- 210 260 235
- CN-U- 214 242 893
- DE-U1- 202021 105 697

## Beschreibung

Die Erfindung bezieht sich auf eine Maschine mit hohem Wirkungsgrad zum Sortieren und Stapeln von Steigen mit zugeklappten Seitenwänden welche, infolge Durchlauf einer Erkennungsstation in welcher, mittels bekannter Bilderkennungssysteme und/oder mechanischer Erkennungssysteme, das Steigenmodell erkannt wird und infolge Durchlauf einer Station zur Erkennung fehlerhafter Steigen, die Steigen, nach Steigenmodellen sortiert, gestapelt werden, wobei die fehlerhaften Steigen eventuell vor oder nach der Stapelvorrichtung ausgeschieden werden.

In den Zentren, wo die Mehrwegsteigen mit klappbaren Seitenwänden gewaschen, getrocknet, sortiert, gezählt, gestapelt und palettisiert werden, sind Stapelvorrichtungen mit hohem Wirkungsgrad gefragt um nicht den hohen Arbeitsrhythmus der vor und/oder nach den Stapel- und Sortiermaschinen installierten Maschinen zu verlangsamen.

Aus der EP 3 865 223 A1 des selben Antragstellers ist eine, die Merkmale des Oberbegriffs des Anspruchs 1 enthaltende, Sortiermaschine für Steigen mit zugeklappten oder festen Seitenwänden bekannt in welcher die Steigen von einem beweglich gelagerten Anschlagorgan am laufenden Förderband zurückgehalten werden um von einer Entnahmevorrichtung der, seitlich vom Förderband angeordneten, Stapelvorrichjtung zugeführt zu werden. Um einen Rückprall der Steigen beim Auftreffen auf das besagte Anschlagorgan zu verhindern, führt dieses eine progressive Abbremsbewegung in Förderrichtung aus und/oder ist dieses mit einer Dämpfvorrichtung ausgestattet. Die Entnahmevorrichtung besteht aus zwei gegeneinander beweglichen Backen welche in offener Position auf die, am Anschlagorgan zurückgehaltene, Steige abgesenkt werden um die Steige zwischen den Backen zu klemmen und diese seitlich in Richtung Stapelvorrichtung zu bewegen wo sie über dem, mit Leitblechen versehenen Stapelschacht fallen gelassen wird. Das progressive Abbremsen der Steigen am Anschlagorgan, bzw. das Dämpfen des Afpralls an diesem, die Klemmbewegung und Freilassbewegung der Klemmbacken der Entnahmevorrichtung sowie die Bewegung der erfassten Steige vom Förderband zum Schacht der Stapelmaschine und die Rückführung der Klemmbacken in die Entnahmeposition über dem Förderband, erfordern beachtliche Zeiten welche die Leistungsfähigkeit der Maschine stark herabsetzen. Zudem geschieht es öfters, dass die von den Klemmbacken frei in den Stapelschacht fallen gelassenen Steigen, wegen der nicht perfekt synchron arbeitenden Klemmbacken, wegen der nicht immer in identischer Position an der Steige greifenden Klemmbacken, wegen der nicht immer präzisen zentralen Position der fallenden Steigen in Bezug auf den Einlauf des Stapelschachtes, trotz der vorgesehenen Leitbleche, sich im Bereich des Schachteinlaufs oder an den vertikalen Führungen des Stapelschachtes verklemmen.

Die Erfindung stellt sich die Aufgabe eine Sortier- und Stapelmaschine der vorgenannten Art zu schaffen in welcher der Durchlauf der einzelnen Steigen mit zugeklappten Seitenwänden welche durch ein Förderband in Richtung Stapelvorrichtung zugeführt werden, mit hoher Geschwindigkeit und ohne Verklemmungen erfolgt.

Zur Lösung dieser Aufgabe schlägt die Erfindung eine Maschine nach Anspruch 1 vor. Bevorzugte Ausführungen werden in den anhängigen Ansprüchen definiert.

Eine nicht erfindungsgemäße Stapelvorrichtung kann ausgestatte sein, mit vertikalen Führungen mit L-förmigem Querschnitt zwecks Halterung des Stapels der von oben zugeführten Steigen und mit einer vertikal beweglichen Ladefläche oder Ladegabel welche zwischen den besagten Führungen, zwecks Aufnahme des Steigenstapels, beweglich ist. Die besagte Ladefläche oder Ladegabel wird bei Zuführung jeder Steige um ein Maß, entsprechend der Stärke einer Steige mit zugeklappten Seitenwänden, nach unten verfahren bis sie den Boden der Vorrichtung erreicht. Sobald die besagte Ladefläche oder Ladegabel den Boden der Vorrichtung erreicht wird der gebildete Steigenstapel auf bekannte Weise aus der Stapelvorrichtung entnommen um üblicher Weise der Palettisierung zugeführt zu werden.

Im oberen Bereich der Stapelvorrichtung sind, entsprechend der Seiten welche parallel zur Förderrichtung der Steigen verlaufen, quer zum Förderband, horizontale Auflagen vorgesehen welche mit vertikalen, zwischen einer zurückgezogenen nicht aktiven Position außerhalb des freien vertikalen Durchsatzes der zu stapelnden Steigen und einer ausgefahrenen aktiven Abfang- und Rückhalteposition beweglichen, Führungen ausgestattet sind. Die Bewegung der besagten horizontalen Rückhalteauflagen mit den vertikalen Führungen erfolgt über pneumatische oder hydraulische, horizontal wirkende Zylinderpaare. Erfindungsgemäß sind die Zylinder, zwecks Vermeidung von Verklemmungen oder Funktionsstörungen welche durch die nicht immer synchrone Wirkung der besagten Zylinder, insbesondere bei hohen Funktionszyklen, verursacht werden, an Ihrer Basis mittels Zwischenlage elastischer Kissen gehaltert, auch die Enden der entsprechenden Kolbenstangen sind an den genannten horizontalen Auflagen mit den vertikalen Führungen mittels Zwischenlage elastischer Elemente gehaltert, während jeweils ein Zylinder jese Paares mit seinem, der Zylinderbasis entgegengesetzten mit elastischem Element versehenen Ende, durch eine fest gehalterte Gabel vertikal gleitend geführt ist.

Erfindungsgemäß ist weiters im oberen Bereich der Maschine, an der Seite gegenüber der Seite wo die zu stapelnden Steigen zugeführt werden, eine vertikal positionierte Anschlagplatte vorgesehen welche um eine Achse in unterer Position schwenkbar gelagert ist, so dass sie, infolge des Aufpralls einer Steige welche quer zum Förderband bewegt worden ist, eine, durch ein bekanntes Dämpfelement, bestehend z.B. aus einem Hohlkörper aus elastischem Material an welchem mindestenes eine eventuell regulierbare Entlüftungsöffnung vorgesehen ist, kontrollierte, angewinkelte Position einnehmen kann. Das besagte Dämpfelement bewirkt dass die schwenkbare Anschlagplatte kontrolliert nachgeben kann, wobei Teil der Aufprallenergie der Steige absorbiert wird, das Dänpfelement teilweise gequetscht wird um anschließend erneut, infoge der kontrollierten Ausdehnung des Dämpfelements, die vertikale Position einzunehmen. Die besagte Aufnahme der Aufprallenergie und die erneute Einnahme der vertikalen Position der schwenkbaren Anschlagplatte bewirkt, dass die Steige, ohne Verklemmungen und in regulärer Poisition nach unten fällt, wobei sie, betreffend ihre Bewegung, von den vertikalen Führungen geführt wird welche, zusammen mit den horizontalen Rückhalteauflagen, die ausgefahrene, aktive Abfangposition für die zu stapelnde Steige einnehmen. Nur im Fall der Entnahme eines vorher gebildeten Stapels von Steigen, bzw. in der Fase einer Neupositionierung der vertikal verfahrbaren Ladefläche oder Ladegabel der Stapelvorrichtung, verweilen die besagten horizontalen Rückhalteauflagen, samt den entsprechenden vertikalen Führungen, in Abfangposition mit der Möglichkeit auch mehr als eine Steige zurückzuhalten. Sobald die vertikal verfahrbare Ladefläche oder Ladegabel die obere Position einnimmt, werden die besagten Auflagen mit den entsprechenden Führungen in die passive Position zurückgezogen, wodurch die zurückgehaltene Steige, bzw. die zurückgehaltenen Steigen, auf die darunter liegende Ladefläche oder Ladegabel abgeladen werden welche, infolge jeder weiteren abgeladenen Steige, sich um ein, der Stärke der Steige mit zugeklappten Seitenwänden, entsprechendes Maß nach unten bewegt wird.

Natürlich kann die Vorrichtung für die Entnahme der Steigen vom sich bewegenden Förderband doppeltwirkend sein und zwar so dass die, von der Erkennungsstation für das Modell der zugeführten Steigen in vorgelagerter Anordnung erkannten Steigen eines ersten Modells in Richtung einer der Längsseiten des Förderbandes bewegt werden, während die erkannten Steigen eines zweiten Modells in Richtung der gegenüberliegenden Längsseite des selben Förderbandes bewegt werden, wobei eine Reduzierung der Ausmaße der Bearbeitungskette ermöglicht wird.

Das Dämpfelement auf welches die schwenkbare **Anschlagplatte** wirkt kann unterschiedlicher bekannter Art sein, z.B. mit Feder welche von einem Kolben kontrollier wird, wobei dieser mit einem Ventil oder einer Düse zwecks Energiedissipation versehen ist und im Inneren eines dichten mit Gas oder Flüssigkeit gefüllten Zylinders wirkt.

Die Erfindung wird anhand eines, in den beigelegte Zeichnungen schematisch dargestellten, vorzuziehenden Ausführungsbeispieles einer erfindungsgemäßen Maschine mit hohem Wirkungsgrad zum Sortieren und Stapeln von Steigen näher erklärt, dabei haben die Zeichnungen rein erklärende, nicht begrenzende Funktion.

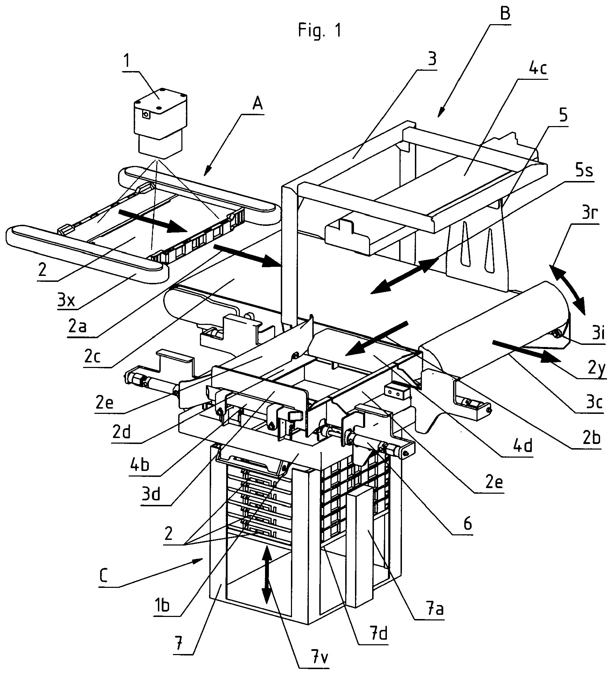

Die Fig. 1 ist eine perspektivische Darstellung einer Maschine zum Sortieren und Stapeln von Steigen mit zugeklappten Seitenwänden welche an einer Seite eines Förderbandes, im Bereich einer Vorrichtung zur Förderung der zugeführten, im Voraus betreffend das Modell und/oder die Funktionstüchtigkeit erkannten, Steigen, quer zur Bewegung des Förderbandes, angeordnet ist.

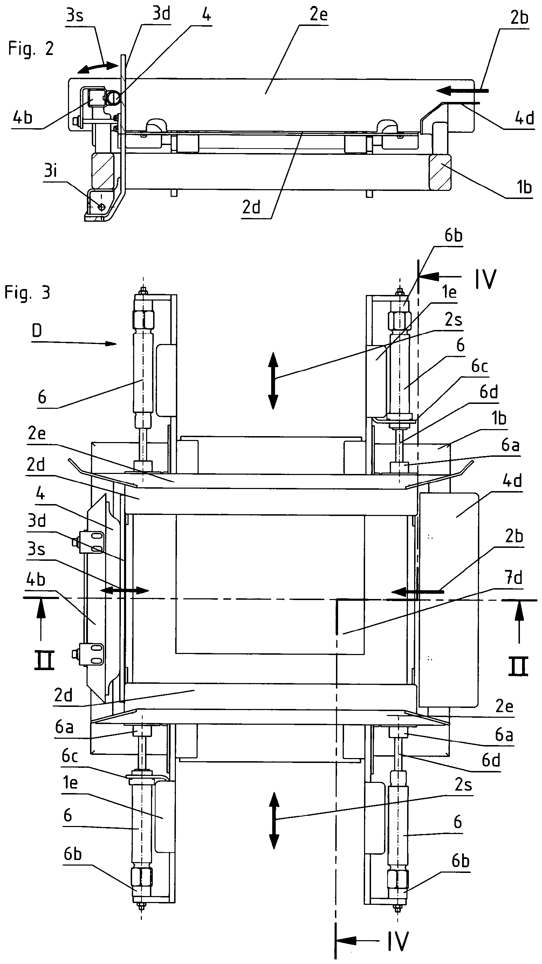

Die Fig. 2 zeigt den Querschnitt entsprechend der in Fig. 3 gezeigten Schnittebene II-II welche sich durch den Führungs- und Rückhaltemechanismus, bestehend aus den horizontalen Rückhalteauflagen mit den vertikalen, horizontal beweglichen Führungen und dem Mechanismus zum Dämpfen des Aufpralls der zum Förderband quer, in Richtung der Sortier- und Stapelvorrichtung, bewegten Steigen, erstreckt.

Die Fig. 3 zeigt die Draufsicht auf den Dämpfmechanismus für den Aufprall der zugeführten Steigen und den Führungs- und Rückhaltemechanismus bestehend aus den horizontalen Rückhalteauflagen samt den horizontal beweglichen vertikalen Führungen, der erfindungsgemäßen Maschine.

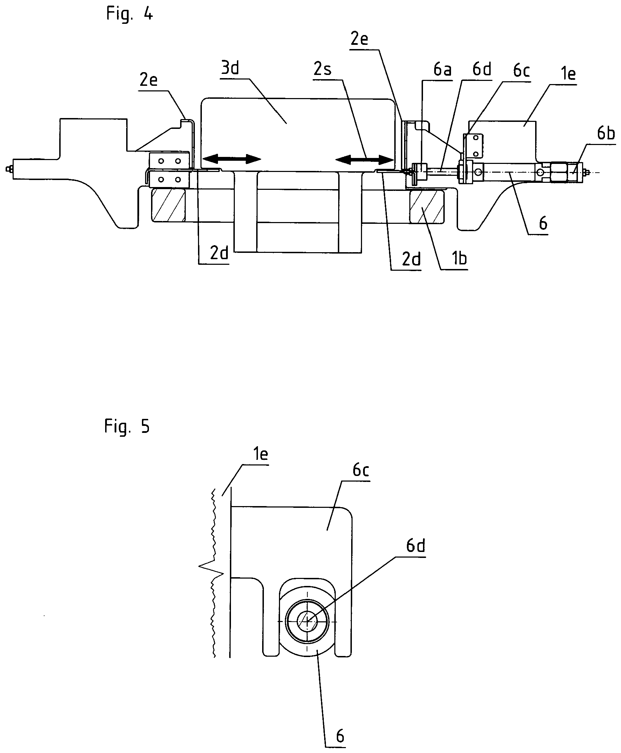

Die Fig. 4 zeigt den Querschnitt entsprechend der in Fig. 3 gezeigten Schnittebene IV-IV betreffend den Bewegungsmechanismus für die seitlichen horizontalen Rückhalteauflagen und die vertikalen Führungen.

Die Fig. 5 zeigt die Vorderansicht einer Führungsgabel welche an einem Zylinder für die Bewegung der horizontalen Auflagen samt vertikalen Führungen wirkt.

In einer bekannten, speziellen Erkennungsstation A werden an den Steigen 2 mit zugeklappten Seitenwänden welche in Richtung 2a mittels Förderbänder 3 zugeführt werden, mittels Kamera 1, Erhebungen zwecks Bestimmung des Modells der Steigen 2 durchgeführt. In einer eventuellen nachfolgenden bekannten Station können weitere Erhebungen durchgeführt werden, z.B, zwecks Überprüfung der Funktionstüchtigkeit der Steigen; der Auswurf eventueller defekter oder nicht durch die folgenden, beidseitig des Förderbandes vorgesehene Stapelvorrichtung C, stapelbare Steigen 2, können einer Auswurfstation zugeführt 2y werden.

Oberhalb des Transportbandes 2c wirkt mindestens eine Querverschiebestation B bekannter Art welche mittels einem, z.B. durch Riemen angetriebenen 5s, Spachtel 5, auf mit dem feststehenden Rahmen 3 verbundenen, Querführungen 4c laufend, in eine oder in beide Richtungen wirkt. Nach der besagten Station B ist ein Rückhalteanschlag 3c vorgesehen welcher um eine horizontale Achse 3i schwenkbar 3r ist, dieser ist in Abhängigkeit der in Station A durchgeführten Erhebungen gesteuert und geeignet um die, in der Stapelvorrichtung C zu stapelnden, Steigen 2 am laufenden 2a Förderband 2c zurückzuhalten. Die nicht mittels Stapelvorrichtung C stapelbaren Modelle hingegen werden nicht vom schwenkbaren Rückhalteanschlag 3c zurückgehalten um in Richtung eines weiteren Rückhalteanschlags mit Querverschiebestation und einer spezifischen Stapelvorrichtung weitertransportiert 2y zu werden. Natürlich kann der schwenkbare Anschlag 3c durch einen vertikal in Richtung Förderband 2c beweglichen Rückhalteanschlag ersetzt werden und können die besagten Anschläge mit bekannten Vorrichtungen zwecks Dämpfung des Aufpralls der Steigen mit Verhinderung des Rückpralls ausgestattet sein. Die vom Rückhalteanschlag 3c am sich bewegenden 2a Förderband 2c zurückgehaltenen Steige 2 wird auf bekannte Art von einem Spachtel 5 welcher, z.B. durch einen Riemen, auf horizontalen Führungen 4c welche mit einem, mit dem Rahmen des Förderbandes oder der Stapelvorrichtung C fest verbundenen Torrahmen 3 laufend, in Querrichtung bewegt 5s wird.

Die Stapelvorrichtung C ist seitlich am Förderband 2, im Bereich der Querbewegung 2b der Steige 2 mittels Spachtel 5, vorgesehen; sie besteht wesentlich im oberen Bereich wo die zu stapelnden Steigen 2 angenommen werden aus einem Rahmen 1b samt horizontal beweglichen 2s Rückhalteauflagen 2d samt Führungen 2e und aus einer Vorrichtung 3d, 4, 4b zur Dämpfung des Aufpralls der Steigen welche mit hoher Geschwindigkeit vom Spachtel 5 in Richtung Stapelvorrichtung B geschoben 5s werden, während sie im unteren Bereich wesentlich aus bekannten vertikalen Halteführungen 7 zwischen welchen eine vertikal bewegliche Ladefläche oder Ladegabel 7d für die fortlaufende Stapelung der, infolge Bewegung 2s der horizontalen Rückhalteauflagen 2d von einer ausgefahrenen aktiven Rückhalteposition in eine zurückgezogene Ruheposition, durch freien vertikalen Fall zugeführten Steigen 2, besteht.

Die Dämpfvorrichtung besteht erfindungsgemäß aus einer im unteren Bereich, um eine horizontale schwenkbar 3s gelagerte 3i, Anschlagplatte 3d. Diese Anschlagplatte 3d liegt rückseitig, wesentlich in vertikaler Position, an einem Dämpfelement auf oder ist mit diesem verbunden, welches aus einem Hohlkörper aus elastischem Werkstoff, z.B. aus einem Kunststoffrohr 4 mit verschlossenen Enden, besteht und mit einer eventuell einstellbaren Entlüftungsöffnung versehen ist. Das besagte Rohr 4 ist an einem starren Element 4b befestigt welches mit dem Rahmen 1b im oberen Bereich der Vorrichtung verbunden ist. Die Erfindung schließt nicht aus, dass das besagte Rohr 4 mit Entlüftungsöffnung durch eine bekannte **Dämpfvorrichtung** ersetzt wird, z.B. durch eine Feder mit einem mit Ventil oder Düse versehenem Kolben welcher im Innern eines dichten, Gas oder Flüssigkeit enthaltenden, Zylinders wirkt. Die Anschlagplatte 3d kann erfindungsgemäß auch horizontal auf, am Rahmen 1b vorgesehenen, Führungen beweglich sein. Die Dämpfung des Aufpralls des seitlichen Randes der durch den Spachtel 5 mit hoher Geschwindigkeit bewegtwen Steige 2 verhindert den Rückprall der Steige und somit die eine Position welche ein Verklemmen während des freien vertikalen Falls nach unten, bzw. in Richtung der sich in Rückhalteposition befindenden, horizontalen Rückhalteauflagen 2b, bewirken könnte,

Um den horizontalen Rückhalteauflagen 2d, zusammen mit den vertikalen Führungen 2e, eine reguläre Rückhaltebewegung 2s, bzw. Bewegung in Freigabestellung, auch bei sehr hohen Arbeitszyklen, zu sichern, schlägt die Erfindung vor, die Zylinder 6 für die Bewegung 2s an ihrer mit der festen Struktur verbundenen Basis als auch an den Enden der entsprechenden Kolbentangen 6d, mit elastischen Kissen 6a, bzw. 6b, zu versehen. Weiters ist, um zu verhindern dass die Wirkung der pneumatischen oder hydraulischen Kolbenpaare 6 auf die selbe vertikale Führung 2e, bzw. auf die horizontale Rückhalteauflage 2d, Fehlfunktionen durch die nicht immer synchron arbeitenden einzelnen Kolben verursachen, erfindungsgemäß an mindestens einem der Zylinder 6 jedes Zylinderpaares eine vertikale Führung durch eine Gabel 6c vorgesehen welche mit einer festen Halterung 1e verbunden ist, wodurch das vordere Ende des, mit entsprechenden vertikalen Rillen versehenen Zylinders 6 vertikal gleitend zurückgehalten wird. Diese Führung mittels Gabel 6c verhindert horizontale Schwenkbewegungen quer zur Achse des selben Zylinders wodurch, trotz der elastischen Kissen 6a, 6b, immer eine reguläre Bewegung 2s frei von Verklemmungen der Rückhalteauflagen 2d zusammen mit den Führungen 2e, gesichert wird.

Das System der Dämpfung des Aufpralls der zu stapelnden Steigen 2 welche mit hoher Geschwindigkeit quer zur Bewegung des Förderbandes 2c vom Spachtel 5 in Richtung Stapelvorrichtung C bewegt 5s werden, verhindert erfindungsgemäß den Rückprall der Steige und bewirkt deren vertikalen Fall, ohne Verklemmungen, zwischen den vertikalen Führungen 2e um von den horizontalen Auflagen 2d zurückgehalten zu werden, bzw. die reguläre Ablage der Steige 2 auf der darunter vorgesehenen Ladefläche oder Ladegabel 7d welche für die Stapelung vertikal beweglich 7v ist, bzw. oben auf dem sich bildenden Steigenstapel, alles bei schnellen Bewegungszyklen der besagten Auflagen 2d samt Führungen 2e.

## Patentansprüche

1. Maschine mit hohem Wirkungsgrad zum Sortieren und Stapeln (C) von Steigen (2) mit klappbaren Seitenwänden welche aus mindestens einem Förderband (2c) besteht an welchem einlaufseitig mindestens eine Erhebungsstation (A), zwecks Erkennung der zugeführten Steigenmodelle, mindestens ein schwenkbarer (3r) oder vertikal auf das Förderband (2c) wirkender Rückhalteanschlag (3c) mit entsprechender Verschiebestation (B) für die einseitige oder beidseitige Bewegung (5s) der Steigen (2) quer zum Förderband (2c) und entsprechende Stapelvorrichtung (C) vorgesehen ist, wobei die Anzahl der, am Förderband (2c) angeordneten, Stapelvorrichtungen (C) der Anzahl der unterschiedlichen bearbeitbaren Steigenmodelle entspricht, wobei die Stapelvorrichtungen (C) an einer oder an beiden Längsseiten des Förderbandes (2c) im Bereich der Verschiebestation (B) vorgesehen ist, **dadurch gekennzeichnet, dass** der obere Teil der jeweiligen Stapelvorrichtung (C) einen starren Rahmen (1b) aufweist welcher an der, der Zufuhr der zu stapelnden, mit großer Geschwindigkeit durch die Verschiebestation (B) bewegten (2b) Steigen (2), entgegengesetzten Seite eine, um eine horizontale Achse (3i) schwenkbar (3s) gelagerte, Anschlagplatte (3d) aufweist welche in vertikaler Position an einem, am feststehenden Rahmen (1b) gehalterten (4b), Dämpfelement (4) anliegt oder mit diesem verbunden ist, dass an beiden Seiten des Rahmens (1b), parallel zur Zuführrichtung (2b) der Steigen (2), quer zum Förderband, horizontale Rückhalteauflagen (2d) vorgesehen sind, welche mit vertikalen, zwischen einer zurückgezogenen nicht aktiven Position außerhalb des freien vertikalen Durchsatzes der zu stapelnden Steigen (2) und einer ausgefahrenen aktiven Abfang- und Rückhalteposition beweglichen, Führungen (2e) ausgestattet sind, wobei die Bewegung über pneumatische oder hydraulische, horizontal wirkende Zylinderpaare (6) erfolgt und dass die Steigen (2) in der Stapelvorrichtung (C) auf eine vertikal verfahrbare Ladefläche oder Ladegabel (7d) fallen.

2. Maschine zum Stapeln von Steigen gemäß Anspruch 1, **dadurch gekennzeichnet dass** das Dämpfelement aus einem geschlossenen Hohlkörper (4) aus elastischem Werkstoff besteht welcher mindestens eine, eventuell regulierbare, Entlüftungsöffnung aufweist.

3. Maschine zum Stapeln von Steigen gemäß Anspruch 1, **dadurch gekennzeichnet, dass** das Dämpfelement aus einer Feder besteht welche durch einen hydraulischen, pneumastischen oder mechanischen Dämpfer gesteuert wird.

4. Maschine zum Stapeln von Steigen gemäß Anspruch 1 und 2, **dadurch gekennzeichnet dass** die Anschlagplatte (3d) am feststehenden Rahmen (1b) horizontal in Richtung der Querbewegung (2b) der, mittels Verschiebestation (B) zugeführten (5s) Steigen (2), gleitend gelagert ist.

5. Maschine zum Stapeln von Steigen gemäß Anspruch 1, **dadurch gekennzeichnet, dass** am selben feststehenden Rahmen (1b), beidseitig der Anschlagplatte (3d), parallel zur Verschiebebewegung (2b) der Steigen (2), quer zur Bewegung (2a) des Förderbandes (2c), mittels pneumatischer oder hydraulischer Zylinder (6), eine horizontale Rückhalteauflage (2d) samt vertikalen Führungen (2e), horizontal beweglich (2s) gelagert ist um, in ausgefahrener Position, durch die seitlichen Führungen (2e) die Position der Steigen (2) am Einlauf in den Stapelschacht zu definieren, um in ausgefahrener Position, deren Fall nach unten zu verhindern, bzw. um, in zurückgezogener Position, den vertikalen Fall und die Ablage der Steigen (2) auf der darunterliegenden, vertikal beweglichen (7v) Ladefläche oder Ladegabel (7d), bzw. auf dem Stapel der vorher auf der Ladefläche oder Ladegabel abgelegten Steigen, zu ermöglichen.

6. Maschine zum Stapeln von Steigen gemäß Anspruch 1, **dadurch gekennzeichnet, dass** die Zylinder (6) welche paarweise, unter sich beabstandet, zwecks Betätigung (2s) jeder der Rückhalteauflagen (2d) zusammen mit den vertikalen Führungen (2e), mittels Zwischenlage eines elastischen Kissens (6b), mit der Basis der Zylinder mit einem, am feststehenden Rahmen (1b) befestigten Träger (1e) verbunden sind, dass die Enden der Kolbenstangen (6d) der besagten Zylinder (6) auf die horizontalen Rückhalteauflagen (2d) samt den vertikalen Führungen (2e) über die Zwischenlage elastischer Kissen (6a) wirken und dass die Anpassungsbewegungen der Zylinder (6), welche durch die elastischen Kissen (6a, 6b) gesichert sind, durch eine Führung mittels Gabel (6c) welche in entsprechenden vertikalen Rillen an mindestens einem der Zylinder des selben Paares wirken, in horizontaler Richtung begrenzt werden, wobei dem selben Zylinder zwar eine vertikale Anpassungsbewegung ermöglicht wird jedoch horizontale Schwenkbewegungen quer zur Achse der Zylinder (6) verhindert werden.

## Claims

1. A machine with high efficiency for sorting and stacking (C) crates (2) with foldable side walls, said machine consisting of at least one conveyor belt (2c), on which there is provided at the inlet end at least one detection station (A) for the purpose of recognizing the crate models fed in, and at least one restraining stop (3c) which is pivotable (3r) or acts vertically on the conveyor belt (2c), with a corresponding displacement station (B) for moving (5s) the crates (2) one way or back and forth transversely to the conveyor belt (2c), and with a corresponding stacking device (C), wherein the number of stacking devices (C) arranged on the conveyor belt (2c) corresponds to the number of different crate models that can be processed, wherein the stacking devices (C) are provided on one or both longitudinal sides of the conveyor belt (2c) in the region of the displacement station (B), **characterized in that** the upper part of each stacking device (C) comprises a rigid frame (1b) which has, on the side opposite that on which the crates (2) to be stacked and moving (2b) at high speed through the displacement station (B) are fed in, a stop plate (3d) which is mounted such as to be pivotable (3s) about a horizontal axis (3i) and which, in the vertical position, bears against or is connected to a damping element (4) held (4b) on the fixed frame (1b), and **in that** horizontal restraining supports (2d) are provided on both sides of the frame (1b), parallel to the feed direction (2b) of the crates (2) and transversely to the conveyor belt, said restraining supports (2d) being equipped with vertical guides (2e) which are movable between a retracted, inactive position outside of the free vertical passage of the crates (2) to be stacked and an extended, active intercepting and restraining position, the movement being effected by way of pneumatic or hydraulic, horizontally acting cylinder pairs (6), and **in that** the crates (2) in the stacking device (C) fall onto a vertically movable loading surface or loading fork (7d).

2. The crate stacking machine according to claim 1, **characterized in that** the damping element consists of a closed hollow body (4) made of elastic material, which has at least one, possibly adjustable, vent opening.

3. The crate stacking machine according to claim 1, **characterized in that** the damping element consists of a spring, which is controlled by a hydraulic, pneumatic or mechanical damper.

4. The crate stacking machine according to claims 1 and 2, **characterized in that** the stop plate (3d) is mounted on the fixed frame (1b) in such a way as to slide horizontally in the direction of the transverse movement (2b) of the crates (2) fed in (5s) by means of the displacement station (B).

5. The crate stacking machine according to claim 1, **characterized in that** a horizontal restraining support (2d) together with vertical guides (2e) is mounted on the same fixed frame (1b), on both sides of the stop plate (3d), parallel to the displacement movement (2b) of the crates (2) and transversely to the movement (2a) of the conveyor belt (2c), in such a way as to be horizontally movable (2s) by way of pneumatic or hydraulic cylinders (6) in order to define, in the extended position, by way of the lateral guides (2e), the position of the crates (2) at the inlet into the stacking shaft so as, in the extended position, to prevent the crates from dropping downward and, in the retracted position, to enable the crates (2) to drop vertically and to be deposited onto the vertically movable (7v) loading surface or loading fork (7d) located therebelow, or onto the stack of crates previously deposited on the loading surface or loading fork.

6. The crate stacking machine according to claim 1, **characterized in that** the cylinders (6), which are arranged in pairs and at a distance from each other, for the purpose of actuating (2s) each of the restraining supports (2d) together with the vertical guides (2e), are connected by the base of the cylinders, through the interposition of an elastic pad (6b), to a mount (1e) fastened to the fixed frame (1b), **in that** the ends of the piston rods (6d) of said cylinders (6) act on the horizontal restraining supports (2d) together with the vertical guides (2e) through the interposition of elastic pads (6a), and **in that** the adjustment movements of the cylinders (6), which are secured by the elastic pads (6a, 6b), are limited in the horizontal direction by a guide by way of forks (6c) which act in corresponding vertical grooves on at least one of the cylinders of the same pair, thereby enabling a vertical adjustment movement but preventing, for the same cylinder, horizontal adjustment movements transverse to the axis of the cylinder (6).

## Revendications

1. Machine à haut rendement pour trier et empiler (C) des plateaux (2) à parois latérales rabattables, qui se compose d'au moins une bande de convoyage (2c), sur laquelle est prévue, côté entrée, au moins une station de saisie (A), en vue de la reconnaissance des modèles de plateaux amenées, au moins une butée de retenue (3c) pivotante (3r) ou agissant verticalement sur la bande de convoyage (2c) accompagnée d'une station de déplacement (B) correspondante pour le déplacement (5s) unilatéral ou bilatéral des plateaux (2) transversalement à la bande de convoyage (2c) et un dispositif d'empilage (C) correspondant, le nombre de dispositifs d'empilage (C) disposés sur la bande de convoyage (2c) correspondant au nombre des différents modèles de plateaux pouvant être traités, les dispositifs d'empilage (C) étant prévus sur l'un ou sur les deux côtés longitudinaux de la bande de convoyage (2c) dans le voisinage de la station de déplacement (B),
**caractérisé en ce que** la partie supérieure de chaque dispositif d'empilage (C) présente un cadre rigide (1b) qui, sur le côté opposé à l'amenée des plateaux (2b) à empiler, déplacés à grande vitesse par la station de déplacement (B), présente une plaque de butée (3d) montée pivotante (3s) autour d'un axe horizontal (3i), qui, en position verticale, est en contact avec un élément amortisseur (4) maintenu (4b) sur le cadre fixe (1b) ou est reliée à celui-ci, **en ce que** des appuis de retenue horizontaux (2d) sont prévus de part et d'autre du cadre (1b), parallèlement à la direction d'amenée (2b) des plateaux (2), transversalement à la bande de convoyage, et sont équipés de guides verticaux (2e) mobiles entre une position rétractée non active, en dehors du libre passage vertical des plateaux (2) à empiler, et une position déployée active d'interception et de retenue, le mouvement étant assuré par des paires de cylindres (6) pneumatiques ou hydrauliques à action horizontale, et **en ce que** les plateaux (2) tombent, dans le dispositif d'empilage (C), sur une surface de chargement ou une fourche de chargement (7d) déplaçable verticalement.

2. Machine pour empiler des plateaux selon la revendication 1, **caractérisée en ce que** l'élément d'amortissement est constitué d'un corps creux fermé (4) en matériau élastique qui présente au moins une ouverture d'aération optionnellement réglable.

3. Machine pour empiler des plateaux selon la revendication 1, **caractérisée en ce que** l'élément amortisseur est constitué d'un ressort qui est commandé par un amortisseur hydraulique, pneumatique ou mécanique.

4. Machine pour empiler des plateaux selon les revendications 1 et 2, **caractérisée en ce que** la plaque de butée (3d) est montée sur le cadre fixe (1b) de manière à pouvoir coulisser horizontalement dans la direction du mouvement transversal (2b) des plateaux (2) amenés (5s) au moyen de la station de déplacement (B).

5. Machine pour empiler des plateaux selon la revendication 1, **caractérisée en ce qu'**un support de retenue horizontal (2d) ayant des guides verticaux (2e) est monté sur le même cadre fixe (1b), de part et d'autre de la plaque de butée (3d), de façon horizontalement mobile, parallèlement au mouvement de déplacement (2b) des plateaux (2), transversalement au mouvement (2a) de la bande de convoyage (2c), au moyen de vérins pneumatiques ou hydrauliques (6), pour définir, en position sortie, par les guides latéraux (2e), la position des plateaux (2) sur le cadre fixe (1b), à l'entrée de la trémie d'empilage, pour empêcher, en position sortie, leur chute vers le bas, respectivement pour permettre, en position rétractée, la chute verticale et la dépose des plateaux (2) sur la surface de chargement ou la fourche de chargement (7d) sous-jacent(e), déplaçable verticalement (7v), ou sur la pile de plateaux préalablement déposés sur la surface de chargement ou la fourche de chargement.

6. Machine pour empiler des plateaux selon la revendication 1, **caractérisée en ce que** les vérins (6), qui sont espacés deux à deux entre eux, sont reliés, afin d'actionner (2s) chacun des supports de retenue (2d) avec les guides verticaux (2e) par l'intermédiaire d'un coussin élastique (6b), à la base des vérins, à un support (1e) fixé au cadre fixe (1b), que les extrémités des tiges de piston (6d) desdits vérins (6) agissent sur les supports de retenue horizontaux (2d) ainsi que sur les guides verticaux (2e) moyennant l'interposition des coussins élastiques (6a) et que les mouvements d'adaptation des vérins (6), qui sont assurés par les coussins élastiques (6a, 6b), sont limités dans la direction horizontale par un guidage au moyen de fourches (6c) qui agissent dans des rainures verticales correspondantes sur au moins l'un des cylindres de la même paire, tout en permettant au même cylindre un mouvement d'adaptation vertical, mais en empêchant des mouvements de pivotement horizontaux transversaux à l'axe des cylindres (6).
